## Europäisches Patentamt
## European Patent Office
## Office européen des brevets

(19)

(11) Veröffentlichungsnummer: **0 125 492**
**B1**

(12) **EUROPÄISCHE PATENTSCHRIFT**

(45) Veröffentlichungstag der Patentschrift:
**30.03.88**

(21) Anmeldenummer: **84104008.2**

(22) Anmeldetag: **10.04.84**

(51) Int. Cl.⁴: **G 01 N 21/03**

(54) **Küvette, insbesondere Durchflussküvette.**

(30) Priorität: **07.05.83 DE 3316751**

(43) Veröffentlichungstag der Anmeldung:
**21.11.84 Patentblatt 84/47**

(45) Bekanntmachung des Hinweises auf die Patenterteilung:
**30.03.88 Patentblatt 88/13**

(84) Benannte Vertragsstaaten:
**BE DE FR GB IT NL SE**

(56) Entgegenhaltungen:
**DE - A - 2 621 895**
**US - A - 3 740 158**

(73) Patentinhaber: **Hellma GmbH & Co. KG**
**Glastechnische-optische Werkstätten,**
**Klosterruns 5 Industriegeblet, D-7840 Müllhelm (DE)**

(72) Erfinder: **Mayer, Peter, Lina-Kromer-Strasse 3,**
**D-7840 Müllhelm (DE)**

(74) Vertreter: **Schmitt, Hans, Dipl.-Ing. et al,**
**Dreikönigstrasse 13, D-7800 Freiburg (DE)**

## Beschreibung

Die Erfindung betrifft eine Küvette gemäss dem Oberbegriff des Anspruchs 1.

Eine derartige Küvette ist aus der DE-A-2 621 895 insbesondere für Metallröhrchen bekannt. Für einen dichten Einsatz dieser Metallröhrchen in der Küvette war dabei sowohl in der Küvettenbohrung als auch an der Aussenseite des Röhrchens eine konische Ausbildung vorgesehen und Metallröhrchen sind starr, also nur schwer an unterschiedliche Bedingungen anpassbar. Darüber hinaus sind Metallröhrchen nicht gegen alle in Küvetten zu untersuchende Medien unempfindlich.

Aus der US-A-3 740 158 ist eine Küvette ebenfalls mit starren Röhrchen aus korrosionsfestem Werkstoff, z.B. aus Glas, Quartz oder Saphir bekannt. Dabei ist die Bohrung bzw. Ausnehmung zur Aufnahme dieses Röhrchens bis zu dem Absatz zylindrisch, also nicht konisch und somit sind die Montage und Abdichtung des Röhrchens schwierig.

Es besteht deshalb die Aufgabe, eine Küvette der eingangs erwähnten Art zu schaffen, bei der die Anschlüsse nicht starr, dennoch aber gegen Chemikalien weitestgehend unempfindlich sind. Gleichzeitig soll dennoch eine feste, dichte und sichere Verankerung in der Küvette möglich sein.

Die Lösung dieser Aufgabe ist in Patentanspruch 1 angegeben. Relativ teure und starre, d.h. wenig anpassbare Edelstahl-Röhrchen werden vermieden. Aufgrund der Flexibilität der Anschlüsse können diese auch selbst bei grosser Länge platzsparend mit der Küvette zusammen gelagert werden.

Durch die geringfügig konische Gestaltung der Bohrung bzw. Ausnehmung kann im Endbereich des Schlauches ein Klemmsitz erzielt werden, wobei der Schlauch aufgrund seines flexiblen Werkstoffes in sich etwas einklemmbar ist, ohne den Innendurchmesser nennenswert zu beeinflussen. Dabei könnte der Schlauch an der Aussenseite auch konisch gestaltet sein, jedoch ist dies bei einem flachen Konuswinkel der Bohrung in vorteilhafter Weise nicht notwendig.

Die Klebestelle kann bevorzugt am Austritt des Schlauches aus der Küvette vorgesehen und insbesondere als Erweiterung der Bohrung bzw. Ausnehmung ausgebildet sein, um einen genügend grossen Kleber-Vorrat zu ermöglichen. Dabei kann für die Verklebung beispielsweise ein Klebstoff mit der Handelsbezeichnung Cehasit 321 vorzugsweise mit einem passenden Härter vorgesehen sein.

Insgesamt ergibt sich so eine Küvette, die keine vorstehenden und somit empfindlichen Glasanschlüsse benötigt, bei der aber auch keine starren und somit nur ungünstig anpassbaren Röhrchen vorgesehen sind, sondern die flexible und somit an unterschiedliche Platzverhältnisse anpassbare Anschlussschläuche hat, die aus chemisch inertem Werkstoff bestehen können, so dass unterschiedlichste Stoffe untersucht werden können. Dabei ergibt sich eine Vereinfachung der Konstruktion, da diese Anschlussschläuche an ihren im Küvetteninneren befindlichen Enden zylindrisch gestaltet sein können, und darüber hinaus nimmt eine Küvette mit einem flexiblen Anschluss – selbst wenn dieser sehr lang ist – wenig Platz weg, da dieser Schlauch bei Nichtgebrauch beispielsweise um die Küvette gewickelt werden kann. Dennoch ergibt sich auch im Inneren der Küvette aufgrund der konischen Gestaltung der den Anschlussschlauch aufnehmenden Ausnehmung und der stirnseitigen Berührung mit einem Absatz in der Bohrung eine gute Dichtigkeit, die den Zutritt der zu untersuchenden Flüssigkeit an den an der Aussenseite befindlichen Klebstoff verhindert.

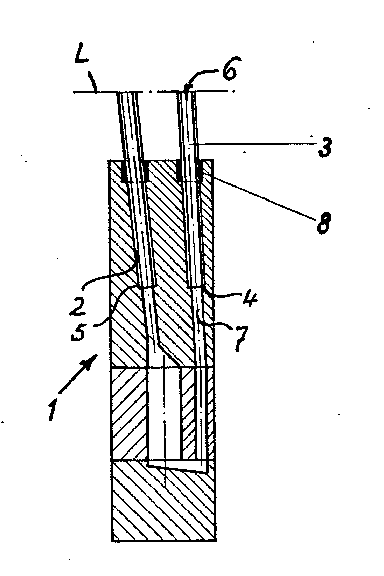

Nachstehend ist die Erfindung anhand der Zeichnung in einem Ausführungsbeispiel noch näher beschrieben.

Die einzige Figur zeigt

einen Schnitt durch eine Durchflussküvette mit zwei Anschlüssen, die erfindungsgemäss von flexiblen Schläuchen aus chemisch resistentem oder inertem Werkstoff gebildet sind.

Eine im ganzen mit 1 bezeichnete Durchflussküvette hat in ihrem Inneren Bohrungen 2, in die erfindungsgemäss als Anschlüsse jeweils ein Schlauch 3 aus chemisch resistentem oder inertem Kunststoff, vorzugsweise aus Polytetrafluoräthylen eingefügt sind.

Die Schläuche 3 sitzen mit ihren Stirnseiten 4 auf entsprechenden Absätzen 5 der Bohrungen 2 auf, so dass einerseits die Innenöffnung 6 des Schlauches und andererseits die Fortsetzung 7 der Bohrung gleichen und sich fortsetzenden Querschnitt haben können.

Die Befestigung der Schläuche 2 in die Küvette 1 erfolgt durch Klebstoff, wobei im Bereich der Klebestelle 8 die Aussenseite des jeweiligen Schlauches 3 angeätzt und mit einem geeigneten Kleber fixiert ist.

Die Bohrungen 2 in der Küvette 1 laufen in ihrem dem Absatz 5 nächstliegenden Bereich geringfügig konisch zu, wobei diese Konizität so gering ist, dass sie in der Zeichnung nicht sichtbar ist. Der Konuswinkel ist dabei zweckmässigerweise so gewählt, dass der vorzugsweise zylindrische Anschlussschlauch 3 ohne oder ohne merkbare Verringerung seines Innenquerschnittes in den so gebildeten Sitz einklemmbar ist und einen dichten Abschluss zwischen der Fortsetzung 7 der Bohrung 2 und der Aussenseite des Schlauches und somit auch der Klebestelle 8 herstellt. Die Klebestelle 8 befindet sich dabei am Austritt des Schlauches 3 aus der Küvette 1 und ist als Erweiterung der Bohrung ausgebildet, um einen gewissen Vorrat an Klebstoff zu ermöglichen.

Da die Schläuche 3 aus einem biegsamen Werkstoff, bevorzugt aus Polytetrafluoräthylen bestehen, können sie beliebig lang gewählt sein, was in der Zeichnung durch die strichpunktierte Bruchlinie L angedeutet ist. Entsprechend gut sind die Anschlussmöglichkeiten der Küvette, ohne dass durch eine grosse Länge der Anschlüsse der Platzbedarf wesentlich vergrössert wird.

## Patentansprüche

1. Durchflussküvette (1), bei welcher die Zu- und Ableitungen durch die Bohrungen oder Ausnehmungen (2) der Küvette (1) eingebrachte Röhrchen hergestellt sind, wobei die Röhrchen mit ihrer Stirnseite (4) innerhalb der Küvette (1) auf einem Absatz (5), vorzugsweise auf einem Bohrungsabsatz aufsitzen und die von der inneren Stirnseite (4) des Röhrchens ausgehende Verbindung zu einem Messkanal etwa den gleichen Durchtrittsquerschnitt wie das zugehörige Röhrchen aufweist und dieses in die Bohrung bzw. Ausnehmung (2) eingeklebt ist, wobei die Bohrung bzw. Ausnehmung (2) in der Küvette (1) in ihrem dem Absatz (5) nächstliegenden Bereich geringfügig konisch ausläuft, dadurch gekennzeichnet, dass das Röhrchen als Schlauch (3) aus chemisch resistentem oder inertem Kunststoff ausgebildet ist und dass der Konuswinkel des konischen Bereiches der Bohrung bzw. Ausnehmung (2) so gewählt ist, dass der Anschlussschlauch (3) ohne oder ohne wesentliche Verringerung seines Innenquerschnittes in diesen Sitz dicht einklemmbar ist.

2. Küvette nach Anspruch 1, dadurch gekennzeichnet, dass der Anschlussschlauch (3) zylindrisch ist.

3. Küvette nach Anspruch 1, dadurch gekennzeichnet, dass das Röhrchen als Schlauch (3) aus Polytetrafluoräthylen ausgebildet ist und im Bereich der Klebestelle (8) an seiner Aussenseite angeätzt und mit einem Kleber für Polytetrafluoräthylen fixiert ist.

4. Küvette nach einem der Ansprüche 1 bis 3, dadurch gekennzeichnet, dass die Klebestelle (8) am Austritt des Schlauches (3) aus der Küvette (1) vorgesehen und insbesondere als Erweiterung der Bohrung bzw. Ausnehmung (2) ausgebildet ist.

5. Küvette nach einem der Ansprüche 1 bis 4, dadurch gekennzeichnet, dass für die Verklebung ein Klebstoff mit der Handelsbezeichnung Cehasit 321 vorzugsweise mit einem Härter vorgesehen ist.

## Claims

1. A flow-through cell (1) wherein the inlets and outlets are produced by tubes inserted in bores or recesses (2) of the cuvette (1), the tubes being seated with their end face (4) inside the cuvette (1) on a shoulder (5), preferably on a shoulder of a bore, and the connection which leads to a measuring channel and departs from the inside end face (4) of the tube having about the same section of passage as the associated tube and the latter being affixed in the bore or recess (2), the bore or recess (2) in the cuvette (1) having a slightly tapered end in the bore region most proximate to the shoulder (5), characterized in that the tube takes the form of a hose (3) made of chemically resistant or inert synthetic material and that the cone angle of the conical region of the bore or recess (2) is selected in such a manner that the connecting hose (3) can be tightly clamped in this seat without the internal cross section of said hose being reduced or without it being considerably reduced.

2. The cuvette as claimed in claim 1, characterized in that the connecting hose (3) is cylindrical.

3. The cuvette as claimed in claim 1, characterized in that the tube takes the form of a hose (3) of polytetrafluoroethylene and is etched on its outside in the region of the point of adhesion (8) and is fixed with an adhesive for polytetrafluoroethylene.

4. The cuvette as claimed in any one of claims 1 to 3, characterized in that the point of adhesion (8) is provided at the outlet of the hose (3) from the cuvette (1) and in particular takes the form of a widening of the bore or recess (2).

5. The cuvette as claimed in any one of claims 1 to 4, characterized in that an adhesive by the trade name of Cehasit 321 is provided for the bonding, preferably with a hardener.

## Revendications

1. Cuvette à circulation (1) dans laquelle les conduites d'arrivée et de départ sont constituées par de petits tubes insérés dans des perçages ou évidements (2) de la cuvette (1), les petits tubes prenant appui, avec leur face frontale (4), à l'intérieur de la cuvette (1), sur un rebord (5), de préférence sur un rebord de perçage, et la liaison vers un canal de mesure, partant de la face frontale intérieure (4) du petit tube, présentant sensiblement la même section de passage que le petit tube correspondant, et celui-ci étant collé dans le perçage ou évidement (2), ce dernier (2) s'étendant, dans la cuvette (1) dans la zone la plus proche du rebord (5), de manière légèrement conique, caractérisée en ce que le petit tube est réalisé sous forme de tuyau (3) en matière synthétique résistant chimiquement ou inerte, et que l'angle de conicité de la zone conique du perçage ou évidement (2) est choisi de telle manière que le tuyau de raccordement (3) peut être coincé de manière étanche dans ce siège, sans diminution ou sans une diminution notable de sa section intérieure.

2. Cuvette selon la revendication 1, caractérisée en ce que le tuyau de raccordement (3) est cylindrique.

3. Cuvette selon la revendication 1, caractérisée en ce que le petit tube est réalisé sous forme de tuyau (3) en polytétrafluoréthylène et est, dans la zone de collage (8), décapé à sa surface extérieure et fixé avec un adhésif pour polytétrafluoréthylène.

4. Cuvette selon l'une quelconque des revendications 1 à 3, caractérisée en ce que la zone de collage (8) est prévue à la sortie du tuyau (3) de la cuvette (1) et est réalisée plus spécialement sous forme d'élargissement du perçage ou évidement (2).

5. Cuvette selon l'une quelconque des revendications 1 à 4, caractérisée en ce que pour le collage est prévue une matière adhésive connue sous la marque de commerce Cehasit 321, avec un durcisseur.